# EUROPÄISCHE PATENTSCHRIFT

(11) **EP 0 706 707 B1**
(45) Veröffentlichungstag und Bekanntmachung des Hinweises auf die Patenterteilung: **10.09.1997**
(21) Anmeldenummer: 94918285.1
(22) Anmeldetag: 20.06.1994
(51) Int. Cl.: G21C 9/016

(54) **EINRICHTUNG ZUM AUFFANGEN UND KÜHLEN VON KERNSCHMELZE**
DEVICE FOR CONTAINING AND COOLING REACTOR-MELTDOWN PRODUCTS
DISPOSITIF POUR LA COLLECTE ET LE REFROIDISSEMENT DE PRODUITS DE FUSION DU COEUR

(30) Priorität: 02.07.1993 DE 4322107
(43) Veröffentlichungstag der Anmeldung: 17.04.1996
(73) Patentinhaber: SIEMENS AKTIENGESELLSCHAFT, 80333 München (DE)
(72) Erfinder: WISTUBA, Lothar, D-91074 Herzogenaurach (DE); HAU, Gerhard, D-72461 Albstadt (DE)
(86) Internationale Anmeldenummer: DE9400701
(87) Internationale Veröffentlichungsnummer: WO9501640

(56) Entgegenhaltungen:
- WO-A-90/10936
- WO-A-92/11642
- FR-A- 2 193 233
- FR-A- 2 616 578
- GB-A- 2 030 347
- US-H- 91

## Beschreibung

Die Erfindung bezieht sich auf eine Einrichtung zum Auffangen von Kernschmelze aus einem Reaktordruckbehälter mit einer Ausbreitungskammer, in der Mittel zur Einleitung von Kühlmittel wie Kühlwasser vorgesehen sind, durch das die sich ausbreitende Kernschmelze kühlbar ist.

Sie ist insbesondere beim EPR-Druckwasserreaktor einsetzbar.

Die bisher üblichen Sicherheitsüberlegungen gingen bei Kernreaktoren davon aus, daß infolge von Materialwahl und Dimensionierung ein Versagen des Reaktordruckbehälters nicht zu befürchten ist. Im Zuge intensiver sicherheitstechnischer Überlegungen zur Kernenergienutzung wird aber neuerdings auch der Fall in die Überlegungen einbezogen, daß ein Reaktordruckbehälter einmal "versagt", und sei dieser Fall auch noch so unwahrscheinlich. Insbesondere ein neuer Reaktortyp, der Europäische Druckwasserreaktor EPR (European Pressurized Water Reactor), basiert auf solchen Überlegungen (VGB Kraftwerkstechnik 73 (1993), Heft 2, Seiten 97 bis 101). Im Gegensatz zur bisherigen Sicherheitsphilosophie wird bei diesem Reaktortyp ein Kernschmelzunfall - ein sogenannter GAU (größter anzunehmender Unfall) - nicht generell ausgeschlossen. Auch sind Überlegungen angestellt worden, ob nicht während eines Kernschmelzunfalls Dampfexplosionen auftreten können, und ob der in einer solch kritischen Phase schlagartig entstehende Wasserdampf den Druckbehälter nicht zum Platzen bringen kann. Es besteht keine Frage, daß solche Unfälle - so theoretisch sie auch sein mögen - beherrschbar sein müssen.

Bei einem hypothetischen schweren Störfall in einem Kernkraftwerk mit wassergekühltem Reaktor wird also angenommen, daß der Reaktorkern schmilzt. Danach tritt Kernschmelze auf der unteren Seite des Reaktordruckbehälters in die Schildgrube im Reaktorsicherheitsbehälter aus. Um einen solchen Störfall beherrschen zu können, müssen geeignete bauliche Maßnahmen getroffen werden, die verhindern, daß die unter Umständen mit Überdruck aus dem Reaktordruckbehälter austretende und sich im Bodenbereich der Kernreaktoranlage ansammelnde Schmelze zu einem Versagen des Reaktorsicherheitsbehälters (Containment) führt.

Aus der deutschen Patentschrift 28 40 086 ist beispielsweise eine Kernreaktoranlage mit einer Auffangeinrichtung für einen abschmelzenden Reaktorkern bekannt, bei der unterhalb der den Reaktordruckbehälter umgebenden Schildgrube ein vertikaler Abflußkanal vorgesehen ist. Dieser Abflußkanal durchsetzt den Reaktorsicherheitsbehälter und führt in eine unterhalb des Reaktorsicherheitsbehälters angeordnete Schmelzgrube. Dort wird die aus dem Reaktordruckbehälter austretende Kernschmelze auf ein Absorberbett verteilt, das durch eine mit wasserfreien Stoffen gefüllte stählerne Wanne gebildet ist. Nach Aufschmelzen dieser stählernen Wanne gelangt die Schmelze auf den Boden der Schmelzgrube. Der Boden und die Seitenwände dieser Schmelzgrube sind wassergekühlt, so daß die Schmelze allmählich erstarrt.

Bei der aus der deutschen Patentschrift 29 25 680 bekannten Kernreaktoranlage ist zur Aufnahme der Schmelze ebenfalls eine unterhalb dem Niveau des Reaktorfundamentes angeordnete Auffangwanne vorgesehen. Die Auffangwanne befindet sich dabei nicht direkt unterhalb des Reaktorkerns, sondern ist neben dem Reaktorkern angeordnet und über eine horizontal über der Auffangwanne auslaufende Rutsche mit dem Boden des Reaktorgebäudes verbunden.

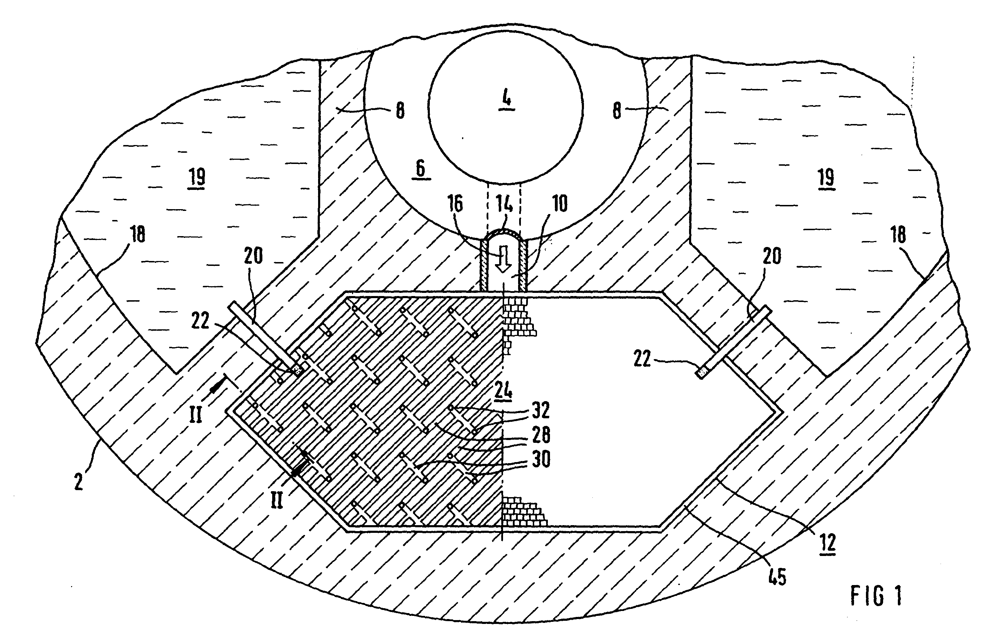

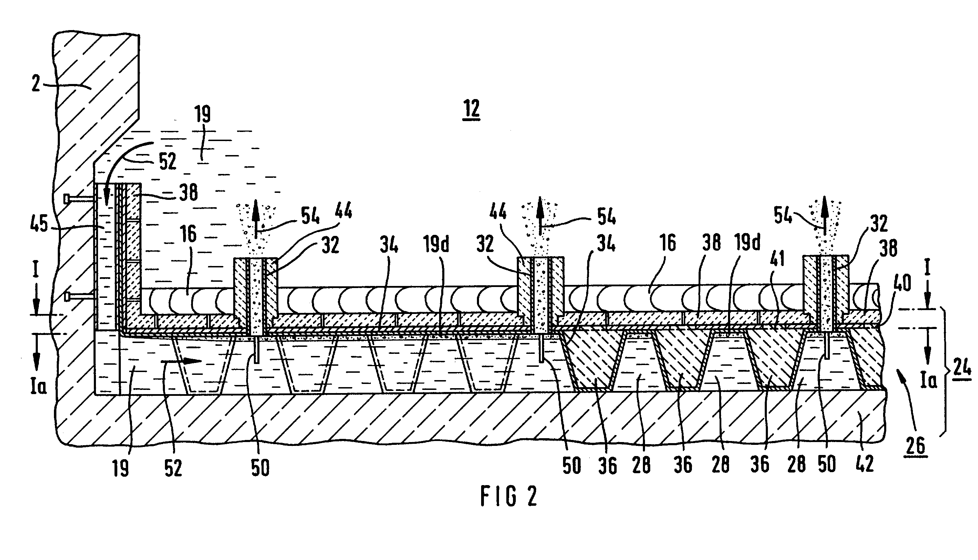

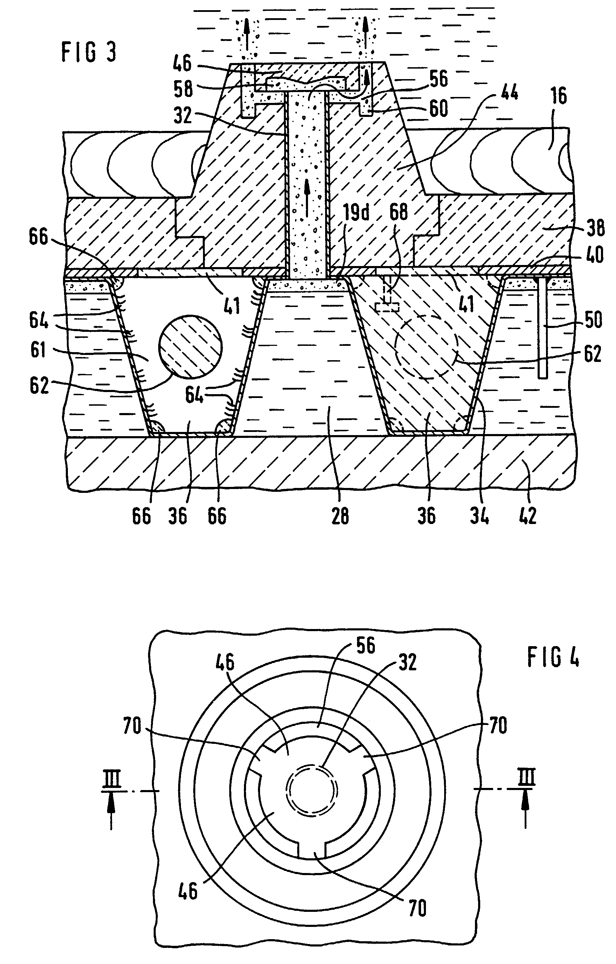

Aus "Emerging Nuclear Energy Systems 1989, Icenes 89, Karlsruhe, 3. bis 6. Juli, Proceedings of the Fifth International Conference on Emerging Nuclear Systems", Seiten 19 bis 24, ist aus Figur 1 eine Kernschmelzenauffangvorrichtung direkt unterhalb des Reaktordruckbehälters eine gekühlte Auffangwanne angeordnet ist, in der sich die Schmelze großflächig ausbreiten und in direktem Kontakt mit Wasser abkühlen kann.

Aus der EP-A1-0 392 604 ist eine Auffang- und Kühleinrichtung bekannt, bei der sich der Wasservorrat unterhalb des Reaktordruckbehälters befindet. Im Kernschmelzfall würden die Kernschmelze und Teile des Reaktordruckbehälters sowie seiner Einbauten direkt in das Wasserbad fallen. Dies ist vom Standpunkt einer effektiven Kühlung und einer Vermeidung von Dampfexplosionen nicht zweckmäßig. Angestrebt wird vielmehr ein Abkühlvorgang, bei dem die ausfließende Kernschmelze nicht sofort auf eine größere Menge Wasser trifft.

In der am 08.06.1993 eingereichten, also noch nicht veröffentlichten deutschen Patentanmeldung P 43 22 107.6 mit dem Titel "Einrichtung und Verfahren zum Auffangen und Kühlen von Kernschmelze" wird eine Einrichtung der eingangs genannten Art, speziell eine Kernrückhalteeinrichtung (Core Retention Device) nach dem Ausbreitungsprinzip angegeben, bei der im Falle eines Versagens des Reaktordruckbehälters die Heftigkeit der Dampfbildung infolge des Kontakts zwischen der Kernschmelze und etwa vorhandenem Wasser erheblich reduziert oder sogar ganz vermieden ist. Diese Einrichtung ist ausgerüstet
a) mit einer unterhalb des Reaktordruckbehälters angeordneten Vorkammer,
b) mit einer Ausbreitungskammer für die Kernschmelze,
c) mit einem Kanal zwischen der Vorkammer und der Ausbreitungskammer, der mit einer von der Kernschmelze zerstörbaren Trennwand versehen ist, und
d) mit einem Kühlmittelreservoir, das über ein von der Kernschmelze zerstörbares Verschlußorgan an die Ausbreitungskammer angeschlossen ist.

Die Ausbreitungskammer ist hier betriebsbedingt trocken.

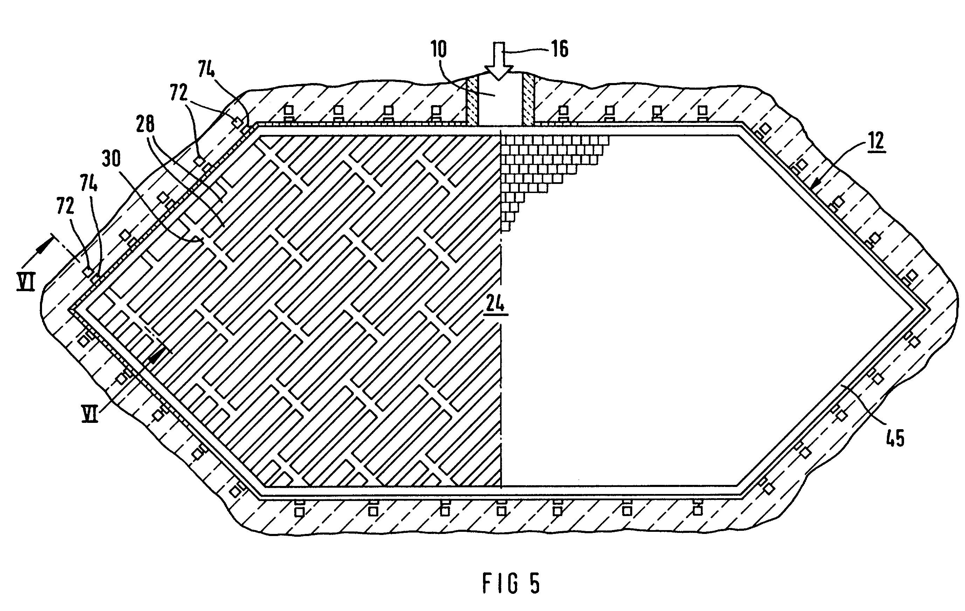

Eine solche Trennwand zwischen der Vorkammer und der Ausbreitungskammer ist auch bereits in Figur 4 der nicht vorveröffentlichten Europäischen Patentanmeldung 93104690.8 gezeigt. Sie besteht aus einer dünnen Stahlplatte und schottet den Auslaß der Vorkammer zu einer Auslaufrinne in Richtung Ausbreitungskammer so lange ab, bis sie durch die Schmelzenhitze zerstört wird. Die Ausbreitungskammer ist hier speziell bei Eintritt der Kernschmelze bereits mit Kühlwasser gefüllt. Die eingangs genannte Einrichtung bezieht sich auf diese ältere Anmeldung, wobei allerdings offenbleiben kann, ob die Ausbreitungskammer im Einsatzfalle trocken oder wassergefüllt ist. Das derzeitige EPR-Konzept geht davon aus, daß die Ausbreitungskammer betriebsbedingt trocken ist.

Die Erfindung beruht auf der Überlegung, daß dem Boden der Ausbreitungskammer bei der Konstruktion besondere Aufmerksamkeit zu schenken ist, um die Kernschmelze in der Ausbreitungskammer sicher auffangen und dort über längere Zeit hinweg kühlen zu können. Man kann sich eine Konzeption vorstellen, bei der dieser Boden aus einem Schutz- oder Feuerfest-Beton besteht, auf dessen Oberfläche sich die Kernschmelze ausbreiten kann, und bei der darunter eine sich über den Innenquerschnitt des Containments erstreckende Beton-Grundplatte angeordnet ist. Unterhalb dieser Beton-Grundplatte kann sich dann der übliche Containment-Liner befinden, der auch die Wände des Containments auskleidet. Unterhalb dieses Containment-Liners wiederum kann eine dicke Bodenplatte angeordnet sein, die wiederum aus Beton besteht. Weitere Überlegungen haben gezeigt, daß auch bei einem solchen Mehrschichten-Boden besondere Vorkehrungen gegen eine Überhitzung getroffen werden müssen.

Zunächst einmal ist festzuhalten, daß im Falle eines Versagens mit Auftreten von Kernschmelze der Containment-Liner, der das Hinaustragen von Radioaktivität in die Atmosphäre verhindern soll, nicht zu heiß werden darf. Wichtig ist auch, daß der genannte Schutz- oder Feuerfest-Beton sowie die Beton-Grundplatte bei Auftreten von Kernschmelze keine zu hohe Temperatur annehmen, und zwar auch nach längerer Zeit nicht, wenn die Kernschmelze in der Ausbreitungskammer steht. Andernfalls könnten sich infolge Zersetzung, beispielsweise von chemisch im Beton gebundenem Wasser, Gase bilden und austreten, was unter Umständen zu einem Hochdrücken oder Abheben der Schutz-Betonschicht in der Ausbreitungskammer führt.

Aufgabe der Erfindung ist es demnach, eine Einrichtung der eingangs genannten Art derart auszugestalten, daß im Bereich der ausgetretenen Kernschmelze, also im Boden der Ausbreitungskammer, eine relativ niedrige Temperatur erreicht werden kann.

Diese Aufgabe wird erfindungsgemäß dadurch gelöst, daß die Ausbreitungskammer seitlich des Reaktordruckbehälters angeordnet ist und einen Boden hat, in dem ein Kühlsystem vorgesehen ist.

Mit Hilfe dieses Kühlsystems wird also die sich auf der Ausbreitungsfläche ausbreitende Kernschmelze von unten zusätzlich gekühlt. Dadurch wird gewährleistet, daß der Boden auf einer relativ niedrigen Temperatur gehalten werden kann. Rechnerische Untersuchungen haben gezeigt, daß man mit Hilfe eines Kühlmittels wie Kühlwasser sowie geeigneter Stoffauswahl und passender Geometrien im Bodenbereich eine Temperatur erzielen kann, die unterhalb von 300° C liegt.

Eine besonders bevorzugte Ausführungsform zeichnet sich dadurch aus, daß das Kühlsystem von der Ausbreitungskammer aus mit dem Kühlmittel bespeisbar ist. Dieses Kühlmittel ist dort ohnehin - spätestens im Versagensfall - vorhanden.

Weitere Untersuchungen haben ergeben, daß das Kühlsystem bevorzugt kein Rohrsystem mit Rohren von rundem Querschnitt umfassen sollte. Denn bei einem solchen Rohrsystem können Schwierigkeiten bei der Dampf-Abfuhr aus den einzelnen Rohren auftreten. Der Dampf sammelt sich nämlich in der oberen Hälfte des Rohrquerschnitts und kann infolge der Abrundung von dort nur schlecht abtransportiert werden. Eine besonders bevorzugte Ausführungsform zeichnet sich demgemäß dadurch aus, daß das Kühlsystem Kühlkanäle von einem nicht-runden Querschnitt umfaßt. Von Vorteil kann es sein, einen quaderförmigen oder trapezförmigen Querschnitt zu wählen. Mit solchen Querschnitten läßt sich, sofern die später erwähnten Abströmrohre verwendet werden, ein relativ leichtes Entfernen des in den Kühlkanälen gebildeten Dampfes erreichen.

Eine erste grundlegende Weiterbildung zeichnet sich dadurch aus, daß zumindest einige der Kühlkanäle mit je einem Dampfabströmrohr versehen sind, das in die Ausbreitungskammer mündet. Mit Hilfe dieser Dampfabströmrohre wird der sich im Kühlsystem bildende Dampf des Kühlmittels in die Ausbreitungskammer abgeführt.

Hierbei kann insbesondere vorgesehen sein, daß das Dampfabströmrohr jeweils mit einer Schutzumhüllung versehen ist, die bevorzugt konisch ausgebildet ist. Diese Ausführung beruht auf der Überlegung, daß die Dampfabströmrohre eine große Festigkeit gegen die ausströmende Kernschmelze besitzen sollten. Dieses ist vor allem dann gewährleistet, wenn die Basis der Schutzumhüllung größer ist als ihr Kopfende, was bei einer konischen Ausbildung der Fall ist.

Eine zweite grundlegende Weiterbildung zeichnet sich dadurch aus, daß zumindest einige der Kühlkanäle mit einer Kühlwasser-Eintrittsleitung verbunden sind, die außerhalb der Ausbreitungsfläche der Ausbreitungskammer angeordnet ist, und daß diese Kühlkanäle an eine Dampf-Austrittsleitung angeschlossen sind, die ebenfalls außerhalb der Ausbreitungsfläche der Ausbreitungskammer angeordnet ist. Bei dieser Ausführungsform ist gewährleistet, daß die Ausbreitungsfläche nicht durch Baustrukturen unterbrochen ist, was ihr eine besondere Festigkeit verleiht.

Weitere vorteilhafte Ausgestaltungen sind in den Unteransprüchen gekennzeichnet.

Ausführungsbeispiele der Erfindung werden im folgenden anhand der Figuren näher erläutert. Es zeigen:
Figur 1 einen Blick von oben auf den Boden einer Ausbreitungskammer, wobei ein Schnitt entlang der Linie I-I von Figur 2 gewählt ist, gemäß der ersten grundlegenden Weiterbildung der Auffang- und Kühleinrichtung;
Figur 2 die in Figur 1 gezeigte Ausbreitungskammer in einer vergrößerten seitlichen Schnittdarstellung, wobei die Blickrichtung II-II in Figur 1 gewählt ist;
Figur 3 einen Ausschnitt einer weiteren Ausbildung des Bodens einer Ausbreitungskammer in einem seitlichen Schnitt;
Figur 4 einen Blick von oben auf die in Figur 3 gezeigte Ausbildung;
Figur 5 einen Blick von oben auf den Boden einer Ausbreitungskammer gemäß der zweiten grundlegenden Weiterbildung der Auffang- und Kühleinrichtung;
Figur 6 die in Figur 5 gezeigte Ausbreitungskammer in einer vergrößerten seitlichen Schnittdarstellung, wobei die Blickrichtung VI-VI in Figur 5 gewählt ist; und
Figur 7 eine Schnittdarstellung von Figur 6, wobei die Blickrichtung VII-VII in Figur 6 gewählt ist.

Für gleiche und gleichartige Bauteile werden im folgenden dieselben Bezugszeichen verwendet.

Nach Figur 1 ist in einem Reaktorsicherheitsbehälter 2 einer Kernreaktoranlage ein Reaktordruckbehälter 4 angeordnet. Der Reaktordruckbehälter 4 wird von einer ihn umgebenden Betonstruktur in einer Reaktor- oder Schildgrube 6 getragen. Ein Teil der Wand, die den Reaktordruckbehälter 4 umgibt, ist als Tragschild 8 eingezeichnet. Der Boden der Schildgrube 6 besteht aus einer feuerfesten Schutzschicht, insbesondere aus einem feuerfesten Betonsockel. Dieser Boden verhindert, daß sich die Kernschmelze nach unten durchfressen kann. Der Reaktordruckbehälter 4 ist beispielsweise im oberen Teil zylindrisch geformt; im unteren Teil kann er eine Kugelkalotte besitzen. Das theoretische Unfallszenario geht davon aus, daß diese Kugelkalotte auf- oder abreißen kann, so daß sich die im Reaktordruckbehälter 4 befindliche Kernschmelze in die Schildgrube 6 ergießt.

Der untere Teil der Schildgrube 6, in dem sich die Kugelkalotte des Reaktordruckbehälters 4 befindet, wird im folgenden als Vorkammer bezeichnet. Bei einem Abreißen der Kugelkalotte würde letztere in die Vorkammer hineinfallen. Damit in einem solch schweren Störfall die austretende Kernschmelze allenfalls auf ein geringes Wasservolumen trifft, sind (nicht gezeigte) Maßnahmen getroffen, damit die Vorkammer unterhalb des Reaktordruckbehälters 4 nur ein kleines Volumen besitzt.

Von der Vorkammer, in der im Störfall die Kernschmelze zunächst auftritt, führt ein Kanal, ein Durchbruch oder eine Verbindung 10 aus feuerfestem Boden- und Wandmaterial zu einer hexagonalen Ausbreitungskammer 12. Die hexagonale Form wurde gewählt, weil sich - sofern quaderförmige Steine vorgegebener Geometrie als oberster Bodenbelag verwendet werden - eine einfache Herstellung ergibt. Wichtig ist im vorliegenden Fall, daß die Ausbreitungskammer 12 seitlich und in einigem Abstand vom Reaktordruckbehälter 4 angeordnet sowie im Normalbetrieb trocken gehalten ist. Die Vorkammer der Schildgrube 6 ist also über die Verbindung 10 mit Abflußöffnung für die Kernschmelze 16 an die Ausbreitungskammer 12 angeschlossen. Die Verbindung 10 kann als horizontaler Kanal ausgebildet sein. Vorzugsweise ist sie aber geneigt und fällt in Richtung auf die Ausbreitungskammer 12 ab. Ihr Boden besteht ebenfalls aus einer feuerfesten Schutzschicht, die sich bis in die Ausbreitungskammer 12 hinein erstrecken kann. In der Verbindung 10 befindet sich eine Schott- oder Trennwand 14, die von der Kernschmelze 16 thermisch zerstört werden kann. Die Schott- oder Trennwand 14 ist also so bemessen, daß sie nach einer vorgegebenen Zeitspanne unter der Wirkung der Kernschmelze 16 zerstört wird. Im vorliegenden Fall ist sie als gewölbte Wand ausgeführt. Sie kann auch in anderer Weise aufgebaut sein.

Die Verbindung 10 hat beispielsweise einen runden oder einen abgerundet-rechteckigen Querschnitt. Sie hat beispielsweise eine Höhe von 1,00 m und eine Breite von 1,20 m. Der dadurch gebildete Kanal besitzt also einen relativ großen Querschnitt, um ein leichtes Ablaufen der Kernschmelze 16 nach dem Öffnen der Trennwand 14 zu ermöglichen. Ein abschüssiger Verlauf der Verbindung 10 ist bevorzugt, damit ein weitgehend restfreies Auslaufen der Kernschmelze 16 vom Vorraum der Schildgrube 6 in die Ausbreitungskammer 12 gewährleistet ist. Die Kernschmelze 16 folgt hierbei der Schwerkraft. Die Fläche der Ausbreitungskammer 12 beträgt beispielsweise 150 m².

Bevorzugt ist durch Maßnahmen sichergestellt, daß ein Kühlmittel wie Kühlwasser 19 in die Ausbreitungskammer 12 erst dann einströmen kann, wenn die Kernschmelze 16 in Richtung des Pfeils in diese bereits eingedrungen ist. Dieser Vorgang wird hier als "trockene Ausbreitung" bezeichnet. Allerdings muß betont werden, daß die Trennwand 14 hier so konzipiert ist, daß sie bei Austritt von Kernschmelze 16 auch dann sicher öffnet, wenn - infolge eines Störfalls - Wasser in die Ausbreitungskammer 12 gelangt ist und damit eigentlich die Gefahr bestehen könnte, daß es zu einer Kühlung und Außerbetriebsetzung der Durchschmelzeigenschaft der Trennwand 14 kommt.

Vorliegend wird beim Auftreten der Kernschmelze 16 in der Ausbreitungskammer 12 automatisch Kühlmittel, insbesondere Kühlwasser 19, aus einem Flutbehälter oder Kühlmittel-Reservoir 18 in die Ausbreitungskammer 12 geleitet. Hierzu dienen Verbindungsrohre 20 zwischen dem Kühlmittel-Reservoir 18 und der Ausbreitungskammer 12, die innerhalb der Ausbreitungskammer 12 jeweils mit einem thermisch zerstörbaren Verschlußorgan 22, beispielsweise mit einem Kunststoffstopfen, versehen sind. In Figur 2 sind die Rohre 20 der Übersichtlichkeit wegen nicht eingezeichnet. Das Reservoir 18 ist hier speziell der ohnehin vorhandene, innenliegende Flutbehälter (IRWST).

Von besonderer Bedeutung ist vorliegend der Aufbau des Bodens 24 der Ausbreitungskammer 12. Dieser Boden 24 der Ausbreitungskammer 12 enthält, wie im folgenden anhand von Figur 1 und 2 näher verdeutlicht wird, ein Kühlsystem 26, das - spätestens nach Einlaufen des Kühlmittels 19 aus dem Flutbehälter 18 in die Ausbreitungskammer 12 - mit eben demselben Kühlmittel 19 gefüllt wird. Dieses Kühlsystem 26 umfaßt ein Kanalsystem, wie in Figur 1 aus dem linken Teil der Draufsicht auf die Ausbreitungskammer 12 deutlich wird. Der rechte Teil der Ausbreitungskammer 12 in Figur 1 zeigt dagegen die Draufsicht auf die darüber liegende Steinschicht, wobei die im folgenden erwähnten Dampfabströmrohre 32 der Übersichtlichkeit wegen nicht gezeigt sind. Der rechte Teil der Ausbreitungskammer 12 von Figur 1 entspricht dabei also der Blickrichtung I-I in Figur 2, und der linke, tiefer gelegene Teil der Ausbreitungskammer 12 von Figur 1 entspricht dabei der Blickrichtung Ia-Ia in Figur 2.

Das Kühlsystem 26 umfaßt eine Anzahl von Längskanälen 28 und eine Anzahl von senkrecht dazu angeordneten Querkanälen 30. Die Kühlkanäle 28, 30 sind im Boden 24 miteinander verbunden. Die Kühlkanäle 28, 30 besitzen einen nicht-runden Querschnitt. Aus Figur 2 geht hervor, daß sie einen trapezförmigen Querschnitt besitzen können. Auch ein quaderförmiger oder anders geformter Querschnitt ist möglich. An den Verbindungs-Endpunkten der Längs- und Querkanäle 28, 30 sind senkrecht auf der Papierebene von Figur 1 stehende Dampfabströmrohre 32 angeordnet.

Aus Figur 2 wird ersichtlich, daß das Kühlsystem 26 durch die Hilfe eines Bleches 34 geformt ist. Hierbei kann es sich insbesondere um ein Austenitblech, beispielsweise von einer Dicke von 4 mm, handeln. Mit Hilfe dieses Bleches 34 sind also die trapezförmigen Längskanäle 28 und gegebenenfalls gleichartig ausgebildete Querkanäle 30 hergestellt. Zwischen den einzelnen Kühlkanälen 28, 30 liesgen jeweils Tragstreifen oder Tragstrukturen 36, die als Betonstreifen ausgeführt sind. Auch diese Tragstreifen 36 besitzen einen nicht-runden Querschnitt; vorliegend haben sie einen trapezförmigen Querschnitt. Sie sollten aus einem feuerfesten Material bestehen.

Bei der Ausführungsform nach Figur 2 besteht der Boden 24 aus einer "Ausbreitungsfläche" oder oberen Schicht 38, die besonders feuerfest ist, weil sich auf ihr die Kernschmelze 16 ausbreitet, einer Auflageschicht oder einem Dehnblech 40, dem Kühlkanalsystem 26 mit den Kühlkanälen 28, 30 und den Tragstreifen 28 aus Feuerfestbeton sowie einer unteren Tragschicht 42 aus Konstruktionsbeton. Bei der Schicht 38 kann es sich insbesondere um Zirkonoxid (ZrO₂)-Steine handeln. Das Dehnblech 40 besteht bevorzugt aus Teilblechen, die unter Freilassung von Dehnungsfugen nebeneinander gelegt sind. Die Kühlkanäle 28, 30 sind allesamt an einen Ringspalt oder ein Ringplenum 45, das am äußeren Rand der Ausbreitungskammer 12 angeordnet ist, angeschlossen. Die Montage des Kühlsystems 26 kann folgendermaßen vonstatten gehen: Zunächst wird die wellen-, speziell trapezförmige Blechbodenstruktur - unterteilt nach Montageabschnitten - eingebracht. Sodann werden die einzelnen Montageabschnitte miteinander verschweißt. Danach werden die Teilbleche des Dehnblechs 40 aufgebracht. Sodann werden an ausgewählten Stellen der Längs- und/oder Querkanäle 28 bzw. 30 die Dampfabströmrohre 32 montiert.

Schließlich werden die oben verbreiterten "Füll-Kanäle" der Blechbodenstruktur mit feuerfestem Beton durch Ausnehmungen 41 im Dehnblech 40 gefüllt, so daß sich die Tragstreifen 36 ergeben.

Die Trapezform der Tragstreifen 36 resultiert in einer günstigen Abtragung der sich darüber befindlichen Lasten.

Wie bereits erwähnt, sind mindestens einige der Kühlkanäle 28, 30 mit je einem senkrecht stehenden Dampfabströmrohr 32 versehen, dessen Mündung um einiges in die Ausbreitungskammer 12 hineinragt. Diese Dampfabströmrohre 32 dienen dazu, den sich am oberen Ende der Kühlkanäle 28, 30 ansammelnden Kühlmittel-Dampf 19d nach oben in den Ausbreitungsraum 12 abzuleiten. Die Mündung der Dampfabströmrohre 32 liegt einiges oberhalb der Kernschmelze 16. Die einzelnen Dampfabströmrohre 32 sind mit einer Schutzumhüllung 44 versehen, die in Figur 2 zylindrisch ausgebildet ist. In Figur 3 wird später die bevorzugte konische Ausbildung gezeigt. Die Schutzumhüllung 44 dient dazu, das Senkrechtstehen der eingeschweißten Dampfabströmrohre 32 trotz Eintritts der Kernschmelze 16 sicherzustellen. In Figur 3 ist später auch gezeigt, daß jedes Dampfabströmrohr 32 an seiner Mündung in der Ausbreitungskammer 12 bevorzugt mit einem Deckel oder einer Schutzabdeckung 46 gegen einfallende Kernschmelze versehen ist.

Gemäß Figur 2 sind in den einzelnen Kühlkanälen 28, 30 sich in Längsrichtung der Kanäle 28, 30 erstreckende Wärmeleitbleche 50 vorgesehen. In Figur 2 muß man sich diese Wärmeleitbleche 50 unterhalb der Papierebene vorstellen. Sie sind mit ihrer oberen Längskante am Austhenitblech 34 verschweißt. Sie erstrecken sich bis knapp vor den Bereich der Dampfabströmrohre 32.

Zur Funktion ist folgendes zu sagen: Im ungestörten Fall sind sowohl die Ausbreitungskammer 12 als auch die Kühlkanäle 28, 30 trocken. Im Störfall tritt die Kernschmelze 16 auf die Ausbreitungsfläche 38 der Ausbreitungskammer 12 und verteilt sich dort. Die Verschlußorgane 22 werden aufgeschmolzen, so daß sich Kühlwasser 19 aus dem Flutbehälter 18 von oben auf die Kernschmelze 16 ergießt. Das Wasser 19 steigt im Ausbreitungsraum 12 an und dringt sodann sowohl über das Ringplenum 45 als auch über die Dampf-Einströmrohre 32 nach unten in das Kanalsystem 28, 30. Hier steht es für die Kühlung des Bodens 24 zur Verfügung. Im Kanalsystem 28, 30 kann sich nun Kühlmittel-Dampf 19d bilden, der über die Dampfabströmrohre 32 nach oben in den Ausbreitungsraum 12 abgeführt wird. Er kondensiert hier oder steigt anschließend in den oberen Teil des Reaktorsicherheitsbehälters 2 auf. Der Weg des nachströmenden Kühlmittels 19 ist durch Pfeile 52 und der Weg des Dampfes ist durch Pfeile 54 gekennzeichnet.

Nach Figur 3 und 4 ist das endseitig im Blech 34 des Kühlkanals 28 verschweißte Dampfabströmrohr 32 von einer konischen Schutzumhüllung 44 umgeben. Diese Schutzumhüllung 44 kann - ebenso wie die obere Schicht 38 - aus Zirkonoxid bestehen. Im oberen Teil ist eine Ringdüse 56 mit Hilfe der Schutzabdeckung 46 gebildet. Dazu hat diese Schutzabdeckung 46 in ihrem unteren Bereich eine Ausnehmung 58. Bevorzugt ist auch im unteren Bereich der Ringdüse 56 ein Auffangring 60 vorgesehen. Dieser dient dazu, von oben gegebenenfalls einfallende Kernschmelze 16 aufzunehmen.

Aus Figur 3 ist ersichtlich, daß das Dehnblech 40 im Bereich der konischen Tragstreifen 36 die Ausnehmungen oder Öffnungen 41 aufweist. Das Dehnblech 40 besteht aus einer Anzahl von aneinandergelegten Dehnblechstreifen, die sich an den Rändern unter Bildung von Dehnfugen (nicht gezeigt) überlappen. Bei Auftreten von Kernschmelze, das heißt bei Temperaturanstieg, schließen sich die Dehnfugen. Die Öffnungen 41 im Dehnblech 40 sind so dimensioniert, daß eine Last von oben auch nach seitwärts auf die Tragstreifen 36 aus Beton übertragen wird.

Es wurde bereits ausgeführt, daß die Tragstreifen 36 mit Hilfe des gebogenen Bleches 34 hergestellt werden. In diesen Tragstreifen 36 können nun quer zur Längsrichtung Rippen oder Versteifungsbleche 61 vorgesehen sein, wie beim linken Tragstreifen 36 von Figur 3 gezeigt. Dieses Versteifungsblech 61 besitzt eine zentrale Bohrung 62. Vor und hinter dem Versteifungsblech 61 befindet sich Beton. Das Versteifungsblech 61 ist mit Hilfe von Schweißstellen 64 am Blech 34 befestigt. Um in den Ecken nicht schweißen zu müssen, sind dort Ausnehmungen 66 vorgesehen. Zur Befestigung der Tragstreifen 36 am Dehnblech 40 können Betonanker 68 dienen.

Aus Figur 4 ergibt sich, daß die Schutzabdeckung 46 drei je um 120° versetzte Arme 70 besitzt. Mit diesen Armen 70 kann der Deckel 46 durch Bajonettverschluß zentral in der Umhüllung 44 befestigt sein.

In Figur 5 ist der Blick auf eine hexagonale Ausbreitungskammer 12 entsprechend Figur 1 gezeigt. Bei dieser Ausführungsform sind allerdings keine Dampfabströmrohre 32 vorgesehen, die den Boden 24 der Ausbreitungskammer 12 durchsetzen. Vielmehr sind jeweils einige der Kühlkanäle 28, 30 mit einer Kühlwasser-Eintrittsleitung 72 verbunden, die außerhalb einer Ausbreitungsfläche der Ausbreitungskammer 12 angeordnet ist. Die betreffenden Kühlkanäle 28, 30 sind auch an eine Dampf-Austrittsleitung 74 angeschlossen, die ebenfalls außerhalb der Ausbreitungsfläche der Ausbreitungskammer 12 angeordnet ist. Aus Figur 5 ergibt sich, daß peripher eine ganze Anzahl von Kühlwasser-Eintrittsleitungen 72 und Dampf-Austrittsleitungen 74 vorgesehen sind. Die Leitungen 72, 74 sind jeweils paarweise vor dem Ringplenum 45 angeordnet.

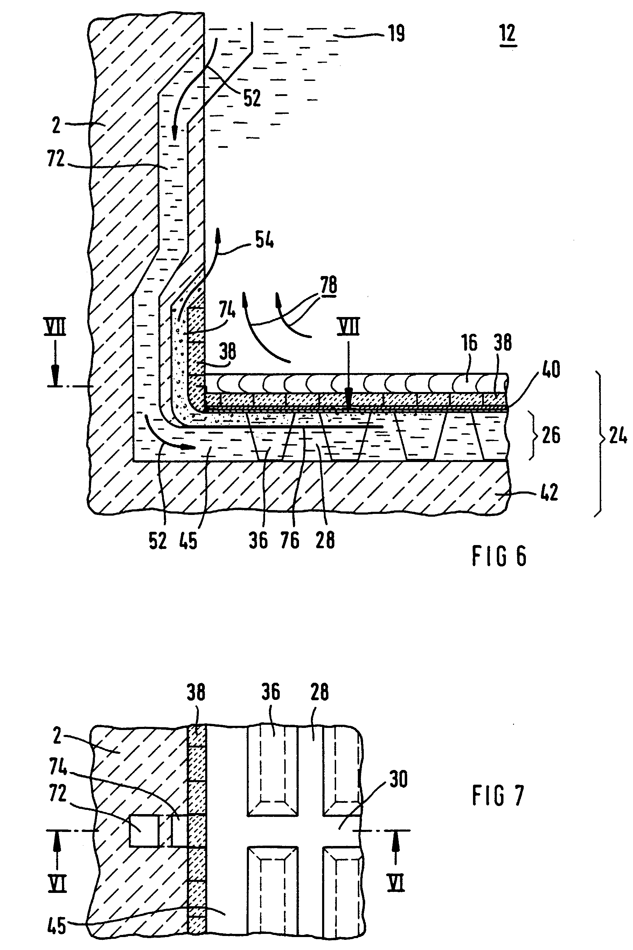

Aus Figur 6 und 7 ergibt sich, daß die Kühlwasser-Eintrittsleitung 72 in einen Kühlkanal 30 übergeht. Die Mündung der Kühlwasser-Eintrittsleitung 72 ist im Boden 24 der Ausbreitungskammer 12 durch ein Leitblech 76 vom Eintritt in die Dampf-Austrittsleitung 74 getrennt. Dadurch wird verhindert, daß sich beim Kühlwasser-Eintritt ein Zwei-Phasen-Gemisch ergibt. Der Kühlwassereintritt ist wiederum durch Strömungspfeile 52 gekennzeichnet. Entsprechend ist der Dampfaustritt durch einen Strömungspfeil 54 charakterisiert. Weitere Strömungspfeile 78 deuten an, daß das Kühlmittel 19 in der Ausbreitungskammer 12 in Zirkulation gehalten wird. Es handelt sich um eine Naturkonvektion.

Bei der Ausführungsform nach Figur 5 bis 7 ist der Boden 24 in gleicher Weise aufgebaut wie bei den Ausführungsformen nach Figur 1 bis 4.

Bei dieser Variante wird also der Dampf in einem die Ausbreitungsfläche gänzlich umfassenden Plenum aufgenommen und über ausgesparte Betonkanäle in den Ausbreitungsraum 12 geführt. Der Volumenausgleich des ausströmenden Dampfes erfolgt durch das Einströmen des Kühlwassers 19 aus höher liegenden Wandbereichen in dasselbe Plenum; es gelangt von hier in die jeweiligen Kühlkanäle 28, 30. Die Dampf-Wasser-Trennung wird im Ausströmungsbereich durch das Leitblech 76 erreicht. Damit wird eine weitgehend ungestörte Dampfströmung hinsichtlich des gegenströmenden Kühlwassers 19 erzielt.

## Patentansprüche

1. Einrichtung zum Auffangen von Kernschmelze (16) aus einem Reaktordruckbehälter (4) mit einer Ausbreitungskammer (12), in der Mittel zur Einleitung von Kühlmittel wie Kühlwasser (19) vorgesehen sind, durch das die sich ausbreitende Kernschmelze (16) kühlbar ist, **dadurch gekennzeichnet**, daß die Ausbreitungskammer (12) seitlich des Reaktordruckbehälters (4) angeordnet ist und einen Boden (24) hat, in dem ein Kühlsystem (26) vorgesehen ist.

2. Einrichtung nach Anspruch 1, **dadurch gekennzeichnet**, daß das Kühlsystem (26) von der Ausbreitungskammer (12) aus mit dem Kühlmittel (19) bespeisbar ist.

3. Einrichtung nach Anspruch 1 oder 2, **dadurch gekennzeichnet**, daß das Kühlsystem (26) Kühlkanäle (28, 30) von einem nicht-runden Querschnitt umfaßt.

4. Einrichtung nach Anspruch 3, **dadurch gekennzeichnet**, daß die Kühlkanäle (28, 30) einen quaderförmigen oder trapezförmigen Querschnitt besitzen.

5. Einrichtung nach einem der Ansprüche 1 bis 4, **dadurch gekennzeichnet**, daß in der Ausbreitungskammer (12) ein von der Kernschmelze (16) zerstörbares Verschlußorgan (22) angeordnet ist, das eine in die Ausbreitungskammer (12) mündende Verbindungsleitung (20) verschließt, die an ein Kühlmittelreservoir (18) angeschlossen ist.

6. Einrichtung nach einem der Ansprüche 1 bis 5, **dadurch gekennzeichnet**, daß mindestens einige der Kühlkanäle (28, 30) mit je einem Dampfabströmrohr (32) versehen sind, das in die Ausbreitungskammer (12) mündet (Fig. 1 - 4).

7. Einrichtung nach Anspruch 6, **dadurch gekennzeichnet**, daß das Dampfabströmrohr (32) mit einer Schutzumhüllung (44) versehen ist, die bevorzugt konisch ausgebildet ist (Fig. 1 - 4).

8. Einrichtung nach Anspruch 6 oder 7, **dadurch gekennzeichnet**, daß das Dampfabströmrohr (32) an seiner Mündung in der Ausbreitungskammer (12) mit einer Abdeckung (46) versehen ist (Fig. 1-4).

9. Einrichtung nach einem der Ansprüche 1 bis 5, **dadurch gekennzeichnet**, daß zumindest einige der Kühlkanäle (28, 30) mit einer Kühlwasser-Eintrittsleitung (72) verbunden sind, die außerhalb der Ausbreitungsfläche der Ausbreitungskammer (12) angeordnet ist, und daß diese Kühlkanäle (28, 30) an eine Dampf-Austrittsleitung (74) angeschlossen sind, die ebenfalls außerhalb der Ausbreitungsfläche der Ausbreitungskammer (12) angeordnet ist (Fig. 5-7).

10. Einrichtung nach Anspruch 9, **dadurch gekennzeichnet**, daß im Boden (24) der Ausbreitungskammer (12) die Mündung der Kühlwasser-Eintrittsleitung (72) durch ein Leitblech (76) vom Eintritt in die Dampf-Austrittsleitung (74) getrennt ist (Fig. 5-7).

11. Einrichtung nach einem der Ansprüche 1 bis 10, **dadurch gekennzeichnet**, daß in den Kühlkanälen (28, 30) Wärmeleitbleche (50) vorgesehen sind (Fig. 1-7).

12. Einrichtung nach einem der Ansprüche 3 bis 11, **dadurch gekennzeichnet**, daß zwischen den Kühlkanälen (28, 30) Tragstreifen (36), bevorzugt Betonstreifen, angeordnet sind, die einen nicht-runden Querschnitt besitzen.

13. Einrichtung nach Anspruch 12, **dadurch gekennzeichnet**, daß die Tragstreifen (36) einen quaderförmigen oder trapezförmigen Querschnitt besitzen.

14. Einrichtung nach einem der Ansprüche 1 bis 13, **dadurch gekennzeichnet**, daß das Kühlsystem (26) Kühlkanäle (28, 30) umfaßt, die aus Blech (34) geformt sind.

15. Einrichtung nach einem der Ansprüche 12 bis 14, **dadurch gekennzeichnet**, daß in den Tragstreifen (36) quer zu deren Längsrichtung Versteifungsbleche (61) angeordnet sind.

16. Einrichtung nach einem der Ansprüche 1 bis 15, **dadurch gekennzeichnet**, daß das Kühlsystem (26) Kühlkanäle umfaßt, die als Längs- und Querkanäle (28, 30) ausgebildet sind, und daß die Kühlkanäle (28, 30) im Boden (24) miteinander verbunden sind.

17. Einrichtung nach einem der Ansprüche 3 bis 16, **dadurch gekennzeichnet**, daß die Kühlkanäle (28, 30) an ein Ringplenum (45) angeschlossen sind, das im Boden (24) die Ausbreitungsfläche (30) umschließt.

18. Einrichtung nach einem der Ansprüche 1 bis 17, **dadurch gekennzeichnet**, daß der Boden (24) Zirkonoxid (ZrO₂)-Steine (38) und/oder eine Konstruktionsbeton-Schicht (42) umfaßt.

## Claims

1. Device for collecting nuclear meltdown products (16) from a reactor pressure vessel (4) having an expansion chamber (12) in which means are provided to introduce coolant such as cooling water (19), by means of which the expanding nuclear meltdown products (16) can be cooled, characterized in that the expansion chamber (12) is arranged to the side of the reactor pressure vessel (4) and has a floor (24) in which a cooling system (26) is provided.

2. Device according to claim 1, characterized in that the cooling system (26) can be supplied with the coolant (19) from the expansion chamber (12).

3. Device according to claim 1 or 2, characterized in that the cooling system (26) includes cooling channels (28, 30) of a cross section which is not round.

4. Device according to claim 3, characterized in that the cooling channels (28, 30) have a cuboidal or trapezoidal cross section.

5. Device according to one of claims 1 to 4, characterized in that a closure part (22) is arranged in the expansion chamber (12), which closure part can be destroyed by the nuclear meltdown products and closes a connection line (20) which opens into the expansion chamber (12) and is connected to a coolant reservoir (18).

6. Device according to one of claims 1 to 5, characterized in that at least a few of the cooling channels (28, 30) are each provided with a steam outlet tube (32) which opens into the expansion chamber (12) (Figures 1 - 4).

7. Device according to claim 6, characterized in that the steam outlet tube (32) is provided with a protective casing (44) which is preferably constructed conically (Figures 1 - 4).

8. Device according to claim 6 or 7, characterized in that the steam outlet tube (32) is provided at its opening in the expansion chamber (12) with a cover (46) (Figures 1 - 4).

9. Device according to one of claims 1 to 5, characterized in that at least a few of the cooling channels (28, 30) are connected to a cooling-water entry line (72) which is arranged outside the expansion surface of the expansion chamber (12), and in that these cooling channels (28, 30) are connected to a steam outlet line (74) which is likewise arranged outside the expansion surface of the expansion chamber (12) (Figures 5 - 7).

10. Device according to claim 9, characterized in that in the floor (24) of the expansion chamber (12) the opening of the cooling-water entry line (72) is separated by a guide plate (76) from the entrance into the steam outlet line (74) (Figures 5 - 7).

11. Device according to one of claims 1 to 10, characterized in that heat guide plates (50) are provided in the cooling channels (28, 30) (Figures 1 - 7).

12. Device according to one of claims 3 to 11, characterized in that between the cooling channels (28, 30) supporting strips (36), preferably concrete strips, are arranged, which have a cross section which is not round.

13. Device according to claim 12, characterized in that the supporting strips (36) have a cuboidal or trapezoidal cross section.

14. Device according to one of claims 1 to 13, characterized in that the cooling system (26) includes cooling channels (28, 30) which are formed from sheet metal (34).

15. Device according to one of claims 12 to 14, characterized in that reinforcement plates (61) are arranged in the supporting strips (36) at right angles to their longitudinal direction.

16. Device according to one of claims 1 to 15, characterized in that the cooling system (26) includes cooling channels which are constructed as longitudinal and transverse channels (28, 30) and in that the cooling channels (28, 30) are connected to each other in the floor (24).

17. Device according to one of claims 3 to 16, characterized in that the cooling channels (28, 30) are connected to a ring plenum (45) which surrounds the expansion surface (30) in the floor (24).

18. Device according to one of claims 1 to 17, characterized in that the floor (24) includes zirconium oxide (ZrO₂) stones (38) and/or a layer of structural concrete (42).

## Revendications

1. Dispositif pour la collecte de produits de fusion du coeur (16) provenant d'une cuve de réacteur (4), pourvue d'une chambre de propagation (12), dans laquelle est prévu un moyen pour l'introduction d'un produit réfrigérant tel que de l'eau de refroidissement (19) grâce auquel les produits de fusion du coeur se propageant peuvent être refroidis, caractérisé en ce que la chambre de propagation (12) est disposée à côté de la cuve du réacteur (4) et possède un fond (24) dans lequel est prévu un système de refroidissement (26).

2. Dispositif selon la revendication 1, caractérisé en ce que le système de refroidissement (26) peut être alimenté en produit réfrigérant (19) à partir de la chambre de propagation (12).

3. Dispositif selon la revendication 1 ou 2, caractérisé en ce que le système de refroidissement (26) comprend des canaux de refroidissement (28, 30) de section non-circulaire.

4. Dispositif selon la revendication 3, caractérisé en ce que les canaux de refroidissement (28, 30) sont de section rectangulaire ou trapézoïdale.

5. Dispositif selon l'une des revendications 1 à 4, caractérisé en ce qu'il est disposé dans la chambre de propagation (12) un organe de fermeture (22) destructible par les produits de fusion du coeur (16), ledit organe obturant une canalisation de jonction (20) qui débouche dans la chambre de propagation (12), ladite canalisation (20) étant reliée à un réservoir de produit réfrigérant (18).

6. Dispositif selon l'une des revendications 1 à 5, caractérisé en ce qu'au moins quelques-uns des canaux de refroidissement (28, 30) sont pourvus chacun d'un tube d'évacuation de vapeur (32) débouchant dans la chambre de propagation (12) (Fig. 1-4).

7. Dispositif selon la revendication 6, caractérisé en ce que le tube d'évacuation de vapeur (32) est pourvu d'une enveloppe de protection (44), ladite enveloppe étant de préférence de forme conique (Fig. 1-4).

8. Dispositif selon la revendication 6 ou 7, caractérisé en ce que le tube d'évacuation de vapeur (32) est pourvu, à son embouchure vers la chambre de propagation (12), d'un couvercle (46) (Fig. 1-4).

9. Dispositif selon l'une des revendications 1 à 5, caractérisé en ce qu'au moins quelques uns des canaux de refroidissement (28, 30) sont reliés à une canalisation d'entrée d'eau de refroidissement (72) qui est disposée en dehors de la surface de propagation de la chambre de propagation (12), et en ce que ces canaux de refroidissement (28, 30) sont reliés à une canalisation d'échappement de vapeur (74) qui est également disposée en dehors de la surface de propagation de la chambre de propagation (12) (Fig. 5-7).

10. Dispositif selon la revendication 9, caractérisé en ce que dans le fond (24) de la chambre de propagation (12), l'embouchure de la canalisation d'entrée d'eau de refroidissement (72) est séparée de l'entrée dans la canalisation d'échappement de vapeur (74) par un déflecteur (Fig. 5-7).

11. Dispositif selon l'une des revendications 1 à 10, caractérisé en ce que des tôles conductrices de chaleur (50) sont prévues dans les canaux de refroidissement (28, 30) (Fig. 1-7).

12. Dispositif selon l'une des revendications 3 à 11, caractérisé en ce que sont disposées entre les conduits de refroidissement (28, 30) des structures portantes (36), de préférence en béton, qui possèdent une section non circulaire.

13. Dispositif selon la revendication 12, caractérisé en ce que les structures portantes (36) ont une section rectangulaire ou trapézoïdale.

14. Dispositif selon l'une des revendications 1 à 13, caractérisé en ce que le système de refroidissement (26) contient des canaux de refroidissement (28, 30) formés de tôles (34).

15. Dispositif selon l'une des revendications 12 à 14, caractérisé en ce que des tôles de renforcement (61) sont disposées dans les structures portantes (36) transversalement par rapport à la direction longitudinale de ces dernières.

16. Dispositif selon l'une des revendications 1 à 15, caractérisé en ce que le système de refroidissement (26) comprend des canaux de refroidissement qui sont formés en tant que canaux longitudinaux et transversaux (28,30) et en ce que dans le fond (24), les canaux de refroidissement (28, 30) sont reliés entre eux.

17. Dispositif selon l'une des revendications 3 à 16, caractérisé en ce que les canaux de refroidissement (28, 30) sont reliés à un canal périphérique (45) qui entoure la surface de propagation au niveau du fond (24).

18. Dispositif selon l'une des revendications 1 à 17, caractérisé en ce que le fond (24) comporte des briques d'oxyde de zirconium (ZrO₂) (38) et/ou une couche de béton de construction.
